# EUROPEAN PATENT SPECIFICATION

(11) **EP 4 283 958 B1**
(45) Date of publication and mention of the grant of the patent: **02.04.2025**
(21) Application number: 23169409.2
(22) Date of filing: 24.04.2023
(51) Int. Cl.: H04L 67/125, H04L 67/565, H04L 67/289

(54) **SYSTEM AND METHODS FOR CONTROLLING GRILLING APPLIANCES VIA EDGE COMPUTING PLATFORMS**
SYSTEM UND VERFAHREN ZUR STEUERUNG VON GRILLGERÄTEN ÜBER EDGE-COMPUTING-PLATTFORMEN
SYSTÈME ET PROCÉDÉS DE COMMANDE D'APPAREILS DE GRILLADE PAR L'INTERMÉDIAIRE DE PLATEFORMES DE CALCUL DE BORD

(30) Priority: 25.05.2022 US 202263345797 P; 07.11.2022 US 202217981710
(43) Date of publication of application: 29.11.2023
(73) Proprietor: Dansons US, LLC, Scottsdale, AZ 85258 (US)
(72) Inventor: Minor,, Ryan, Scottsdale, 85258 (US); Hartlieb,, Mark, Scottsdale, 85258 (US); Monaco,, Frank, Scottsdale, 85258 (US); Divya D. Valla Malla,, Perini, Scottsdale, 85258 (US)
(74) Representative: Potter Clarkson

(56) References cited:
- CN-A- 107 280 496
- CN-A- 111 243 589
- KR-A- 20140 135 318
- US-A1- 2020 093 331
- US-B2- 8 730 038
- - -: "Edge computing", 11 May 2022 (2022-05-11), pages 1 - 6, XP093074874, Retrieved from the Internet <URL:https://en.wikipedia.org/w/index.php?title=Edge_computing&oldid=1087339970> [retrieved on 20230818]
- FETTE GOOGLE I ET AL: "The WebSocket Protocol; rfc6455.txt", THE WEBSOCKET PROTOCOL; RFC6455.TXT, INTERNET ENGINEERING TASK FORCE, IETF; STANDARD, INTERNET SOCIETY (ISOC) 4, RUE DES FALAISES CH- 1205 GENEVA, SWITZERLAND, 11 December 2011 (2011-12-11), pages 1 - 71, XP015081377
- - -: "The WebSocket API (WebSockets)", 17 March 2022 (2022-03-17), pages 1 - 4, XP093074832, Retrieved from the Internet <URL:https://web.archive.org/web/20220317204041/https://developer.mozilla.org/en-US/docs/Web/API/WebSockets_API> [retrieved on 20230818]
- WEI YU ET AL: "A Survey on the Edge Computing for the Internet of Things", IEEE ACCESS, vol. 6, 1 January 2018 (2018-01-01), pages 6900 - 6919, XP055522506, DOI: 10.1109/ACCESS.2017.2778504

## Description

### Technical Field

The present disclosure relates to control systems in general and more particularly to methods and systems for controlling grilling appliances via mobile devices.

### Background

Grilling appliances, such as any of a wide range of indoor or outdoor grilling, griddle, and smokers, are well-known in the art and have been used for decades in food preparation. Such grilling appliances were originally provided with manual controls that allowed the user to control various aspects of the grilling appliance, most commonly temperature, although other systems, such as rotisserie systems, could also be manually controlled.

More recently, grilling appliances have been produced with electronic control systems that provide convenient electronic control of the various grilling systems. Grilling appliances with electronic control systems were eventually produced that allowed a user to control them remotely from a portable electronic device, such a cellular phone or other type of mobile device, typically via a short-range data link, such as Bluetooth. However, such remote control of the grilling appliance required the mobile device to be within signal range of the grilling appliance, typically a few meters. While grilling appliances were later developed that allowed the mobile device to communicate with the grilling appliance via the Internet, the latency or time-delay associated with control via the Internet often made remote control of the grilling appliance a frustrating experience for the user. Moreover, the data bandwidth requirements of such Internet-enabled control systems would often introduce additional latency, particularly if the Internet connection with either the grilling appliance and/or mobile device was of limited bandwidth.
US 2020/0093331 A1 discloses a kitchen appliance having a control arrangement configured to receive sound commands and to operate the appliance in response to the sound commands. A microphone receives sounds comprising a sound command and provides the sound to the control arrangement. An acoustic filter suppresses background noise created by the operation of the kitchen appliance. US 8 730 038 B2 relates to remotely controlling a grilling appliance.

### Summary of the Invention

The present invention comprises a method, computer-implemented method, and system as defined in the independent claims. Further advantageous aspects of the invention are set out in the dependent claims.

Embodiments that do not fall within the scope of the claims are to be interpreted as examples useful for understanding the invention.

### Brief Description of the Drawings

Illustrative and presently preferred exemplary embodiments of the invention are shown in the drawings in which:
Figure 1 is a schematic block diagram of one embodiment of a system for operating/interfacing with a grilling appliance via an edge computing platform;
Figure 2 is a flow chart representation of one embodiment of a method of operating/interfacing with a grilling appliance via the edge computing platform;
Figure 3 is a flow chart representation of one embodiment of a method of controlling at least one function of the grilling appliance;
Figure 4 is a flow chart representation of one embodiment of a method of transferring data from the grilling appliance to a mobile application;
Figure 5 is a flow chart representation of one embodiment of a method of transferring data from the grilling appliance to a database server; and
Figure 6 is a flow chart representation of one embodiment of a method of transferring data from the mobile application to a database server.

### Detailed Description of the Preferred Embodiments

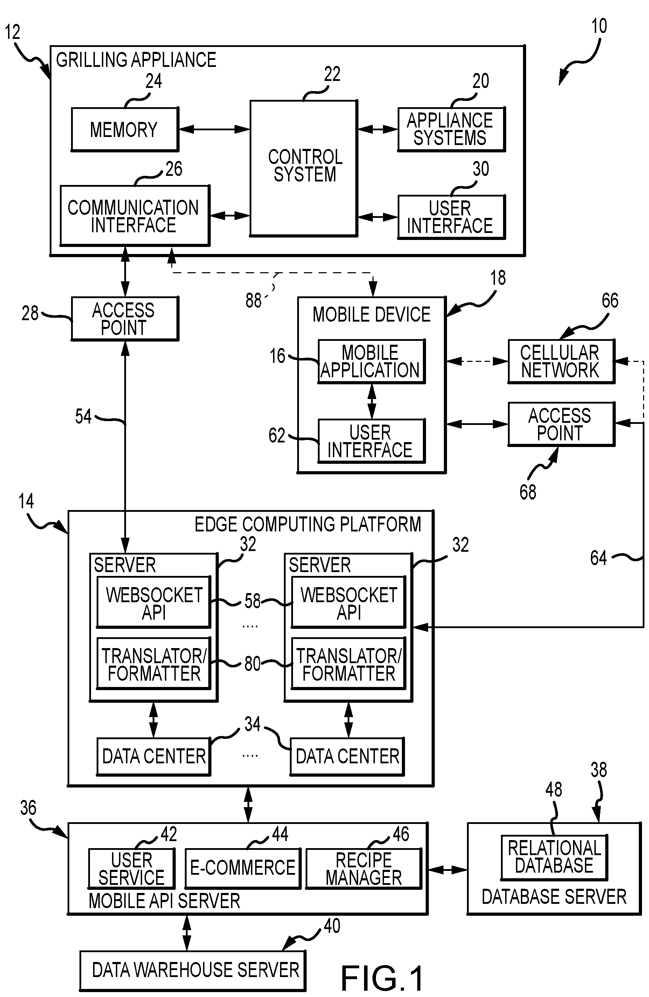

One embodiment of a system 10 for controlling/interfacing with a grilling appliance 12 via an edge computing platform 14 is illustrated in Figure 1 and allows a user (not shown) to interface with and/or control grilling appliance 12 by means of a software or mobile application 16 provided on a mobile device 18. As will be described in much greater detail herein, the disclosed systems and methods allow the user to control and/or interface with grilling appliance 12 in any of a wide variety of ways. For example, in some embodiments the systems and methods disclosed herein allow the user to control certain functions and operations of the grilling appliance 12, as may be required or desired for a cooking operation. In other embodiments, the disclosed systems and methods allow user and/or mobile application 16 to exchange information and data with the grilling appliance 12, such as, for example, to implement software updates, to learn about possible malfunctions, or for troubleshooting. In still other embodiments, the disclosed systems and methods allow the user to request and receive external content, such as informational materials, recipes, and e-commerce services and to use that external content as desired, such as, for example, in subsequent grilling operations.

Briefly, grilling appliance 12 may comprise any of a wide range of outdoor or indoor grilling, griddle, or smoking devices used in food preparation. Grilling appliance 12 may be provided with any of a wide range of grilling appliance systems 20 that may be required or desired for the operation of grilling appliance 12. For example, such grilling appliance systems 20 may include, without limitation, one or more fuel control systems (e.g., for controlling the feed rate of gas, wood pellets, or electrical power to a heating element), fuel ignition systems, temperature sensing systems, temperature control systems, cooking cycle control systems, and rotisserie systems. Grilling appliance 12 may also include one or more control systems 22 to control the functions and operations of the various grilling appliance systems 20. In some embodiments, control system(s) 22 may also receive information and data from the various grilling appliance systems 20.

Control system(s) 22 also may be operatively associated with one or more memory systems 24 and one or more communication interface systems 26. Memory system(s) 24 may contain instructions for control system(s) 22 and may also provide storage for information and data collected by control system(s) 24 during operation of grilling appliance 12. Communication interface system(s) 26 allows control system 22 to communicate with the edge computing platform 14, either directly or via a suitable access point 28. In some embodiments, the communication interface system(s) 26 may also allow control system 22 to communicate directly with mobile device 18, such as, for example, via a short-range wireless communications protocol, such as a Bluetooth communications protocol.

Grilling appliance 12 may also include a user interface system 30 that is operatively associated with control system 22. User interface system 30 may allow the user to view information and data provided by control system 22 and/or provide control commands to control system 22.

Edge computing platform 14 may comprise one or more 'edge' servers 32 and related data centers 34. Grilling appliance 12 may be operatively connected to at least one edge server 32, typically via an access point 28. Mobile device 18 may be connected to the same edge server 32 or to a different edge server 32 depending on the particular physical location of mobile device 18 or other factors.

System 10 may also comprise at least one mobile API server 36, at least one database server 38, and at least one data warehouse server 40. The various servers 36, 38, and 40 may be operatively connected with one another and with edge computing platform 14 to allow information and data to be exchanged between the various servers, devices, and systems. In some embodiments, and as will be described in further detail below, mobile API server 36 may comprise a user service module 42, an e-commerce/advertising module 44, and a recipe management module 46. Database server 38 may comprise a relational database 48 in order to implement the various functions and operations of database server 38, as will be further described herein.

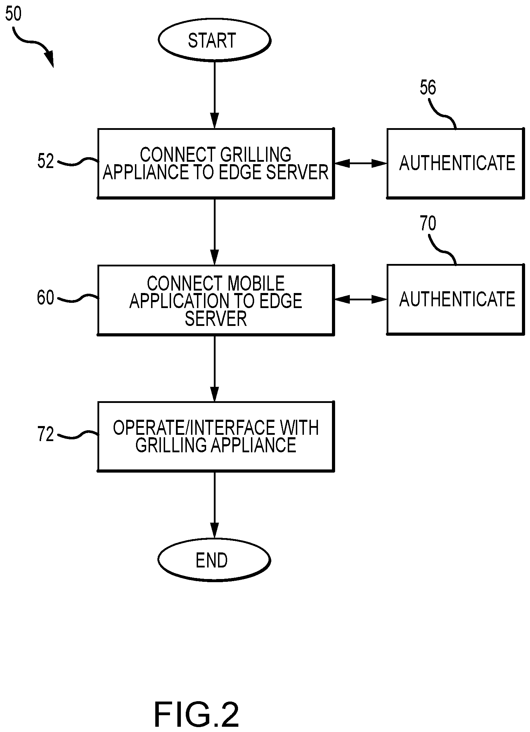

Referring now to Figures 1 and 2 simultaneously, system 10 may be operated in accordance with a method 50 to allow the user to interface with and/or control grilling appliance 12. A first step 52 of method 50 may involve connecting grilling appliance 12 to at least one edge server 32 comprising edge computing platform 14. The connection may be accomplished via communications interface system 26 and access point 28. In some embodiments, the user may accomplish the connection step 52 by operating user interface 30 provided on grilling appliance 12. The connection process or step 52 results in the formation or establishment of a two-way communication link 54 between grilling appliance 12 and edge server 32. Connection step 52 may utilize an authentication process 56 or 'handshake' to authenticate the particular user and/or grilling appliance 12. In some embodiments, the connection and authentication processes 52 and 56 used to establish two-way communication link 54 may be accomplished via a websocket API 58 provided on edge server 32. Once the handshake authentication process 56 is complete and two-way communication link 54 established, grilling appliance 12 may send data to mobile API server 36, which may then transfer the data to mobile application 16, all without the need to poll mobile API server 36.

A next step 60 of method 50 may involve connecting the mobile application 16 provided on mobile device 18 with at least one edge server 32 comprising edge computing platform 14. The particular edge server 32 that may be connected to the mobile application 16 may be the same edge server 32 that is operatively connected to grilling appliance 12. Alternatively, if mobile device 18 is located at a different geographic location, then mobile application 16 may be operatively connected to a different edge server 32 of edge computing platform 14. In any event, and regardless of the particular server 32 that is connected to mobile application 16, the connection step 60 may be accomplished by a user interface 62 provided on mobile device 18 by mobile application 16. The connection process or step 60 results in the formation or establishment of a two-way communication link 64 between the mobile application 16 and edge server 32. The two-way communication link 64 established between mobile device 18 and edge computing platform 14 may be via a cellular network 66 or a suitable access point 68. Similar to connection step 52, connection step 60 may utilize an authentication process 70 or 'handshake' to authenticate the particular user and/or mobile application 16. The connection and authentication processes 60 and 70 used to establish two-way communication link 64 also may be accomplished via websocket API 58 provided on server 32. Once the handshake authentication process 70 is complete, mobile application 16 may send data to mobile API server 36, which may then transfer the data to grilling appliance 12, all without the need to poll mobile API server 36.

Once the communication links 54 and 64 have been established, the user may operate and/or interface with grilling appliance 12 at step 72 to perform any of a wide range of actions. Such actions may include, but are not limited to, control and/or operation of grilling appliance 12, data exchange with grilling appliance 12, and interactions with mobile API server 36.

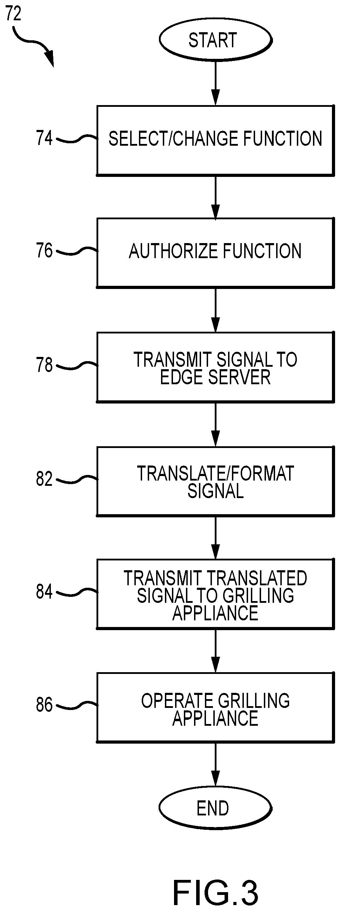

For example, and with reference now to Figure 3, in one embodiment, operation/interface step 72 may allow the user to select or change, e.g., at step 74, at least one function or operation of grilling appliance 12. As mentioned earlier, such functions may include, but are not limited to, fuel control, fuel ignition, temperature control, cooking cycle control, and rotisserie speed. The user may make the desired selection or change 74 via user interface 62 provided on mobile device 18 by mobile application 16. Once the user has made the desired selection or change 74, the user may then authorize or execute the desired selection or change 74, e.g., at step 76, by providing the appropriate authorization command via user interface 62. Alternatively, the desired selection or change could be automatically authorized or executed by mobile application 16 without requiring further user input.

In any event, once the desired selection or change has been authorized at step 76, mobile application 16 will cause mobile device 18 to transmit, e.g., at step 78, a signal to edge server 32. The signal may be transmitted to edge server 32 via communication link 64. In some embodiments, the signal may be transmitted in a native language format, e.g., Java Script, of mobile application 16. A translator/formatting module 80 operatively associated with edge server 32 may then translate, e.g., at step 82, the native language format signal into a translated signal suitable for causing control system 22 of grilling appliance 12 to perform the selected function. In some embodiments, the translated signal may be in a hexadecimal data format, although other data formats may be used as well. In many embodiments, the translated signal may then be formatted into one or more data packets suitable for transmission to grilling appliance 12 via communication link 54. Once the data packets have been created, e.g., by translation/formatting step 82, edge server 32 may then transmit, e.g., at step 84, the data packets to the control system 22 of grilling appliance 12. Thereafter control system 22 of grilling appliance 12 may operate the various appliance system 20 to implement the selected function.

The system 10 may also configured to perform a wide range of other operations/interfaces (e.g., via step 72) related to grilling appliance 12 and/or the operation thereof. For example, the system 10 may also be used to deliver to the user and/or grilling appliance 12 a wide range of external content, such as recipes and software updates. The systems and methods described herein may also be used for product registration and remote troubleshooting of grilling appliance 12. E-commerce functionalities may also be provided, allowing users to readily access related goods and services or other types of goods or services that may be of interest to the user of grilling appliance 12. Information relating to local dealers may also be provided to the user. Still further in some embodiments, control system 22 of grilling appliance 12 may periodically transmit to edge server 32 information and data relating the function and/or operation of grilling appliance 12. Edge server 32 may then transmit that collected data to data warehouse server 40, where it may be used to assess the use and performance of grilling appliance 12, e.g., for implementing product improvements or changes.

Significant advantages of the systems and methods described herein stem from the use of the edge computing platform 14, rather than a cloud computing methodology, to allow the user control and/or interface with grilling appliance 12. An edge computing platform is a distributed computing paradigm that positions computational and data storage assets closer to sources of data. This significantly improves response times and reduces bandwidth requirements. However, edge computing platforms and the so-called "internet of things" (IoT) are not synonymous. An edge computing platform is a topology and location-sensitive form of distributed computing, while the IoT is a use-case instantiation of edge computing. As used herein, the terms "edge computing" and "edge computing platform" therefore refer to an architecture rather than a specific technology.

By connecting the grilling appliance 12 and mobile device 18 to one or more edge servers 32 comprising edge computing platform 14, the systems and methods disclosed herein provide the user with near real-time control of the grilling appliance 12, without the high latency and bandwidth requirements associated with cloud computing methodologies. For example, the latency associated with typical cloud computing methodologies may dely implementation of the control signals by 30 seconds or more, making remote user control of the grilling appliance 12 a difficult and frustrating experience for the user. The reduced bandwidth requirements may further reduce latency, particularly in instances wherein the communications links, e.g., 54 and 64, between the edge server(s) 32, grilling appliance 12, and mobile device 18 may be subject to bandwidth limitations.

Still other advantages are associated with the use of the websocket API 58 to establish the two-way communication links 54, 64 provided between the edge server(s) 32, grilling appliance 12, and mobile application 16, e.g., via mobile device 18. The two-way communication links provides for duplex communication between the various devices. That is, the logical relationship between the various devices is that of a peer-to-peer network, rather than client-server network. This logical relationship further speeds communications and reduces latency.

Still yet other advantages are associated with the process used to authenticate the various devices and systems. For example, once the authentication process or handshake has been completed, the established two-way communication link allows grilling appliance 12 and mobile application 16 to exchange data with mobile API server 36 without having to poll API server 36, thereby further reducing communications latency and bandwidth requirements. The substantially reduced latency made possible by the methods and systems disclosed herein means that in most instances, the user will perceive near instantaneous control of and/or data exchange with grilling appliance 12. This is so regardless of the respective geographic locations of grilling appliance 12 and mobile device 18. The systems and methods disclosed herein therefore represent a significant improvement in the technology of grilling appliance control systems.

Having briefly described certain embodiments of the systems and methods of controlling and/or interfacing with grilling appliances, as well as some of their more significant features and advantages, various embodiments and alternative configurations of the systems and methods will now be described in detail. However, before proceeding with the description, it should be noted that while the systems and methods are shown and described herein as they could be used in conjunction with 'generic' grilling appliances and mobile devices, persons having ordinary skill in the art will readily recognize that the systems and methods disclosed herein could be used in conjunction with any of a wide range of grilling appliances and mobile devices that are now known in the art or that may be developed in the future. Therefore, the systems and methods disclosed herein should not be regarded as limited to the particular applications, systems, devices, and instrumentalities shown and described herein.

Referring back now to Figure 1, various embodiments of systems 10 for controlling grilling appliance 12 are shown and described herein as they could be used to control and/or interface with grilling appliance 12 by way of software or mobile application 16 provided on mobile device 18. As briefly described above, in many instances, the control and/or interface with grilling appliance 12 will occur via one or more servers 32 comprising edge computing platform 14. However, in other instances, mobile device 18 may be used to directly control and/or interface with grilling appliance 12, i.e., without involving servers 32 of edge computing platform 14.

As already briefly described, grilling appliance 12 may comprise any of a wide range of indoor or outdoor grilling, cooking, griddle, or smoking devices now known in the art or that may be developed in the future. The fuel used to provide the heat for cooking, smoking, and/or grilling may be provided by any of a wide range of sources, such as propane, natural gas, wood chips, wood pellets, charcoal, electricity, or combinations thereof. Grilling appliance 12 may be provided with any of a wide range of grilling appliance systems 20 to implement any of a wide range of cooking, grilling, or smoking functions. By way of example, such cooking control systems 20 may comprise fuel control systems, e.g., for controlling the feed rate of gas, solid fuels, or electrical power, fuel ignition systems, cooking cycle control systems, and rotisserie systems, that may be required or desired for the operation of grilling appliance 12. However, since systems suitable for controlling various aspects of grilling appliances are well-known in the art and could be readily provided by persons having ordinary skill in the art, the particular cooking or grilling systems 20 that may be utilized in grilling appliance 12 will not be described in further detail herein.

Grilling appliance 12 may also comprise one or more control systems 22 operatively connected to the grilling or cooking systems 20. Control system(s) 22 may be used to control the functions and operations of the various systems 20. Control system(s) 22 may also receive information and data from the various systems 20. Such information and data may include, for example, information and data required by any feedback control systems (not shown) utilized by control system(s) 22 as well as information and data related to the functioning or 'health' of the various systems 20. Grilling appliance 12 may also include one or more memory systems 24 operatively associated with control system(s) 22. Memory system(s) 24 allow control system(s) 22 to operate the various grilling systems 20 and to perform the various functions and operations described herein. Memory system(s) 24 may also store information and data collected by control system(s) 22.

Control system(s) 22 may comprise one or more general purpose programmable controllers (e.g., electronic computers or processors) and associated systems (e.g., cache memory systems, I/O systems, etc.) of the type that are well-known in the art or that may be available in the future that are, or would be, suitable for performing the functions and operations described herein. Similarly, memory system(s) 24 may comprise any of a wide range of memory systems of the type that are well-known in the art that would be suitable for use with control system(s) 22. Consequently, the particular control system(s) 22 and memory system(s) 24 that may be used in conjunction with grilling appliance 12 will not be described in further detail herein.

Regardless of the particular control system(s) 22 and associated memory system(s) 24 that may be provided, control system(s) 22 may be programmed or configured to operate in accordance with the methods described herein. The methods may be embodied in software or firmware provided on non-transitory computer-readable storage media (e.g., memory system(s) 24) accessible by control system 22. The software or firmware may comprise computer-executable instructions that, when performed by control system 22, cause control system 22 to operate the various systems and implement the various methods and functionalities in accordance with the teachings provided herein.

Control system 22 may also be operatively connected to one or more communication interface systems 26. Communication interface system(s) 26 allows control system 22 to communicate with one or more edge servers 32 of edge computing platform 14 as well as mobile device 18. As such, communication interface system(s) 26 may comprise one or more wireless radio systems (not separately shown) for communicating with such external systems and devices either directly or indirectly, e.g., via access point 28. By way of example, in the particular embodiments shown and described herein, the communication interface system 26 may comprise an intermediate-range radio configured to communicate with various external devices and systems via one or more intermediate-range wireless communications protocols, such any of the IEEE 802.11x communications protocols, commonly referred to as "Wi-Fi." In some embodiments, communication interface system 26 may also comprise a short-range radio configured to communicate with various external devices and systems via one or more short-range wireless communications protocols, such as any of a wide range of Bluetooth wireless communications protocols. Alternatively, other types of wireless communications systems and communications protocols may be used as well. Therefore, the disclosed systems, methods, and instrumentalities should not be regarded as limited to use with any particular type of communication interface system(s) 26.

Grilling appliance 12 may also be provided with one or more user interface systems 30 operatively connected to control system(s) 22. User interface system(s) 30 may allow the user to view information and data provided by control system 22 and/or to provide commands to control system 22. User interface system 30 may comprise any of a wide range of user interface systems, such as one or more touch screens (not separately shown). Alternatively, user interface system 30 may comprise one or more separate display screens and associated keypads and/or pointer devices (also not separately shown), that well-known in the art or that may be developed in the future. Consequently, the present invention should not be regarded as limited to any particular type of user interface system(s) 30.

Mobile device 18 may comprise any of a wide range of devices, such as smart phones, tablet computers, laptop computers, wearable devices, etc., that are now known or that may be developed in the future that allow users to wirelessly connect to other systems and devices via any of a wide range of wireless communication protocols (e.g., Bluetooth, Wi-Fi, or cellular networks) that are now known in the art or that may be developed in the future. Therefore, the systems and methods disclosed herein should not be regarded as limited to use with any particular type of mobile device 18.

The system 10 may also comprise a software or mobile application 16 provided on mobile device 18. As briefly described above, mobile application 16 allows the user to control grilling appliance 12 via a user interface 62 provided on mobile device 18. In addition, mobile application 16 also allows the user to interact with various other elements and devices comprising system 10, including edge computing platform 14 and mobile API server 36. For example, API server 36 may be used to deliver external content to the user of mobile device 18. Such external content may include, but is not limited to, recipes and other e-commerce functionalities. External content may also include and software updates for the grilling appliance 12. Such information and data may be exchanged with the mobile device 16 from any geographical location where the edge computing platform 14 is accessible. The software application 16 provided on mobile device 18 may also be used for product registration and remote troubleshooting of the grilling appliance 12.

The software or mobile application 16 allows the mobile device 18 to be operated in accordance with the methods described herein, either alone or in conjunction with other components and devices of system 10, including grilling appliance 12. Accordingly, mobile application 16 may be provided on non-transitory computer-readable storage media (not separately shown) accessible by mobile device 18 and may comprise computer-executable instructions that, when performed by mobile device 18, cause mobile device 18 to operate the various systems and devices and implement the various functionalities in accordance with the teachings provided herein.

Edge computing platform 14 may comprise one or more edge servers 32 and related data centers 34. Each edge server 32 may be provided with a websocket API 56 as well as a translator/formatting module 80. Websocket API 56 may be used to facilitate the establishment of the two-way communication links 54 and 64 between server(s) 32 and grilling appliance 12 (e.g., via link 54), and server(s) 32 and mobile device 18 (e.g., via link 64). Translator/formatting module 80 may be used to translate signals from the mobile device 18, which may be provided in a native language format (e.g., Java Script), into translated data (e.g., hexadecimal data) suitable for operating control system 22 of grilling appliance 12. Translator/formatting module 80 may also format the translated data into one or more data packets suitable for transmission via communication link 54. Translator/formatting module 80 may also be used to translate data from control system 22 into the native language format (e.g., Java Script) used by mobile application 16.

System 10 may also comprise at least one mobile API server 36, at least one database server 38, and at least one data warehouse server 40. The various servers 36, 28, and 40 may be operatively connected to one another and to edge computing platform 14 to allow data to be exchanged between the various systems and devices. Mobile API server 36 may comprise a user service module 42, an e-commerce/advertising module 44, and a recipe management module 46. In the particular embodiments shown and described herein, mobile API server 36 is primarily responsible for handling user requests, recipe requests, and e-commerce functionalities. These requests and functionalities will typically be provided via mobile device 18. In some embodiments, mobile API server 36 may also be configured to authenticate users, obtain recipes, identify dealers, and interact with e-commerce services, such as Shopify.

Database server 38 may comprise a relational database 48 to implement the various functions and operations of database server 38. Database 38 server may be configured to implement any of a wide range of database systems, such as MySQL, using any of a wide range of data objects, such as PHP data objects. Database server 38 may be used to receive and store information and sent by grilling appliance 12 via edge server 32. Database server 38 may also receive and store information and data sent by mobile application 16 provided on mobile device 18. The collected and stored information and data received from the grilling appliance 12 and mobile application 16 may be periodically exported to data warehouse server 40, which may comprise a portion of a data cloud service, for subsequent analysis.

With reference back now to Figures 1 and 2, system 10 may operated in accordance with method 50 to allow the user to control and/or interface with grilling appliance 12. Step 52 of method 50 may involve connecting grilling appliance 12 with at least one edge server 32 comprising edge computing platform 14. In some embodiments, the user may accomplish connection step 52 via the user interface 30 provided on grilling appliance 12. Alternatively, in other embodiments, the user may accomplish the connection step 52 via the mobile application 16 provided on mobile device 18. For example, in embodiments wherein the communication interface system 26 of grilling appliance 12 is provided with a short range wireless communication system (e.g., Bluetooth) and wherein mobile device 18 is within range of grilling appliance 12, the user may accomplish the connection step 52 directly from mobile device 18 via short-range communication link 88.

In any event, and regardless of whether the connection process 52 is accomplished via the user interface 30 provided on grilling appliance 12 or the user interface 62 provided on mobile device 18, the connection process or step 52 results in the formation or establishment of the two-way communication link 54 between grilling appliance 12 and edge server 32. In most embodiments, the two-way communication link 54 between grilling appliance 12 and edge server 32 may be established via access point 28.

In some embodiments, connection step 52 may utilize an authentication process 56 or handshake to authenticate the particular user and/or grilling appliance 12. In some embodiments, the connection and authentication processes 52 and 56 used to establish two-way communication link 54 may be accomplished via websocket API 58 provided on edge server 32. As described earlier, once the handshake or authentication process 56 is complete, grilling appliance 12 may send data to mobile API server 36, which may then transfer the data to mobile application 16, all without the need to poll mobile API server 36.

Step 60 of method 50 may involve connecting the mobile application 16 provided on mobile device 18 with at least one edge server 32 comprising edge computing platform 14. As mentioned earlier, the particular edge server 32 that may be connected to the mobile application 16 may be the same edge server 32 that is operatively connected to grilling appliance 12. Alternatively, mobile application 16 may be operatively connected to a different edge server 32 of edge computing platform 14 if the mobile device 18 is located at a different geographic location, i.e., that is physically nearer to a different edge server 32. In any event, and regardless of the particular server 32 that is in range of mobile device 18, connection step 60 may be accomplished via user interface 62 generated by mobile application 16. The connection process 60 results in the formation or establishment of the two-way communication link 64 between the mobile application 16 and edge server 32. The two-way communication link 64 established between mobile device 18 and edge computing platform 14 may be via a cellular network 66 or a suitable access point 68.

In some embodiments, connection step 60 may utilize an authentication process 70 or handshake to authenticate the particular user and/or mobile application 16. In some embodiments, the connection and authentication processes 60 and 70 used to establish two-way communication link 64 may be accomplished via websocket API 58 provided on server 32. After the handshake authentication process 70 has been completed, mobile application 16 may send data to mobile API server 36, which may then transfer the data to grilling appliance 12, all without the need to poll mobile API server 36.

Once the communication links 54 and 64 have been established between one or more servers 32, grilling appliance 12, and mobile device 18, respectively, the user may operate and/or interface with grilling appliance 12 at step 72 to perform any of a wide range of actions (e.g., controls, operations, and functions) provided by system 10. For example, and with reference now to Figure 3, in one embodiment, control/interface step 72 may allow the user to select or change, e.g., at step 74, at least one function or operation of grilling appliance 12 (e.g., by operating one or more grilling appliance systems 20). Depending on the particular grilling appliance 12, such functions may include, but are not limited to, fuel control, fuel ignition, temperature control, cooking cycle control, and rotisserie speed. The user may make the desired selection or change 74 via user interface 62 provided by mobile application 16. Once the user has made the desired selection or change 74, the user may then authorize or execute the desired selection or change 74 at step 76 by providing the appropriate command via user interface 62. In other embodiments, the desired selection or change could be automatically authorized or executed by mobile application 16 without requiring further user input.

Once the desired selection or change has been authorized at step 76, mobile application 16 will cause mobile device 18 to transmit at step 78 a signal to edge server 32. The signal may be transmitted to edge server 32 via communication link 64. See Figure 1. In some embodiments, the signal may be provided in a native language format of mobile application 16, e.g., Java Script. Upon receipt of the signal, translator/formatting module 80 of edge server 32 may then translate, e.g., at step 82, the native language format signal into a translated signal suitable for use by control system 22 of grilling appliance 12. By way of example, in one embodiment the signal from mobile device 18 may be translated into a hexadecimal data format, although other data formats may be used. Translator/formatting module 80 may also format the translated (e.g., hexadecimal) signal into one or more data packets suitable for transmission via communication link 54. Once the data packet(s) have been created, e.g., by translation/formatting step 82, edge server 32 may then transmit, at step 84, the data packet(s) to the control system 22 of grilling appliance 12. Transmission of the data packet may be via communication link 54 and communication interface system 26. See Figure 1. Significantly, all of the steps of process 72 are accomplished without the use of any type of cloud computing server. Thereafter control system 22 of grilling appliance 12 may operate the grilling appliance 12 in accordance with the selected function.

As described earlier, some embodiments may permit short-range, two-way communication link 88 (e.g., a Bluetooth link) to established directly between the communication interface system 26 of grilling appliance 12 and mobile application 16 of mobile device 18. In such embodiments, the control/interface step 72 may be conducted without the need for edge computing platform 14. In such embodiments, either the mobile application 16 or the control system 22 of grilling appliance 12 may be provided with a suitable translator module (not shown) to translate signals from the native language format of mobile application 16 into a format that can be used to operate control system 22. Thereafter, control system 22 may operate grilling appliance 12 in accordance with the selected function.

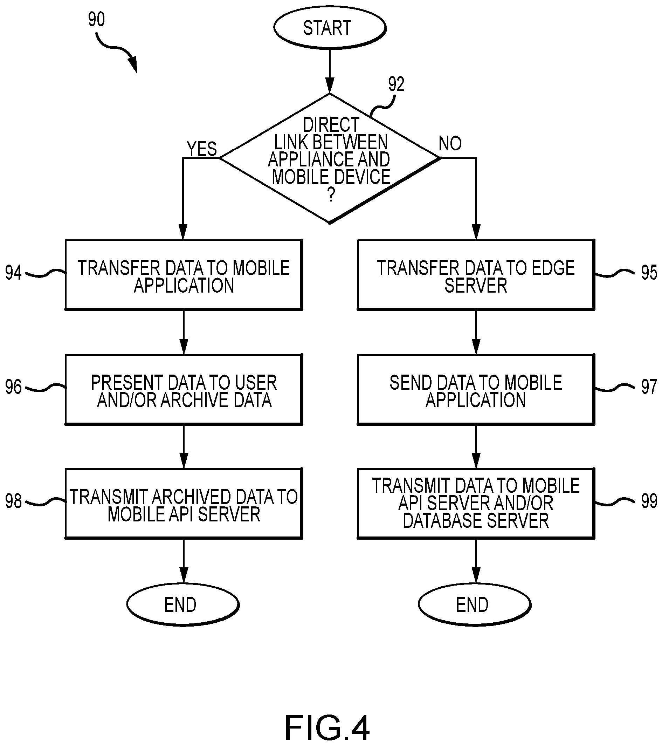

As mentioned earlier, the disclosed systems and methods may also be operated to provide other functionalities besides the control functionalities described above and illustrated in Figure 3. For example, and with reference now to Figure 4, system 10 may be operated in accordance with a process 90 wherein grilling appliance 12 sends information and data to the mobile application 12. Such information and data may include, but is not limited to, information and data relating to the current operational state of grilling appliance 12, the operational state of individual systems 20 of grilling appliance 12, and the 'health' of grilling appliance 12 or individual systems 20, such as whether any malfunctions have been detected. A first step 92 in process 90 determines whether mobile device 18 is directly connected to grilling appliance 12 via short-range communication link 88. If so, control system 22 may transfer, at step 94, the information and data directly to mobile application 16 via communication link 88. Thereafter, the information and data may be presented on user interface 62 at step 96. In some embodiments, mobile application 16 may subsequently transfer, at step 98, the received information and data to edge computing platform 14 via communications link 64. Thereafter, the information and data may be transferred to mobile API server 36 for further analysis and/or action.

Alternatively, if it is determined at step 92 that there is no short-range communication link 88 with mobile device 18, control system 22 of grilling appliance 12 may transfer, at step 95, the information and data to edge server 32 via two-way communication link 54. Thereafter, edge server 32 may transmit, at step 97, the information and data to mobile application 16 via two-way communication link 64. Optionally, edge server 32 may transmit, at step 99, the information and data to mobile API server 36 and/or database server 38 for further analysis and/or storage. Steps in process 90 are accomplished without interfacing with any type of cloud computing service.

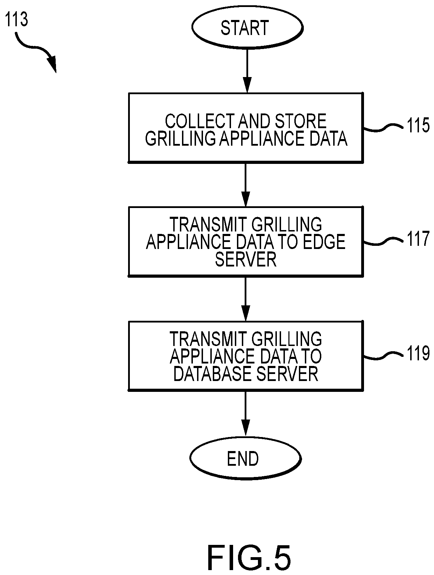

The disclosed systems may also be configured to provide still other functionalities. For example, and with reference now to Figure 5, system 10 may be operated in accordance with a process or method 113 in which control system 22 of grilling appliance 12 collects and transmits to edge computing system 14 information and data relating to the operation of grilling appliance 12. A first step 115 of method 113 involves collecting selected data relating to the operation of grilling appliance 12. Such data may include, but is not limited to, data relating to the function and operation of the various grilling systems 20, the commands sent by the user to implement selected grilling functions, and data relating to any malfunctions that may have occurred. Control system 22 may then transmit, at step 117, the collected data to edge computing platform 14. The transmission may occur via two-way communication link 54. Control system 22 may automatically (i.e., without requiring further user input) perform method 113 on a periodic basis, such as once daily. Alternatively, other reporting frequencies could be used. Thereafter, edge server 32 may transfer, at step 119, the collected data to database server 38 for further analysis and/or storage.

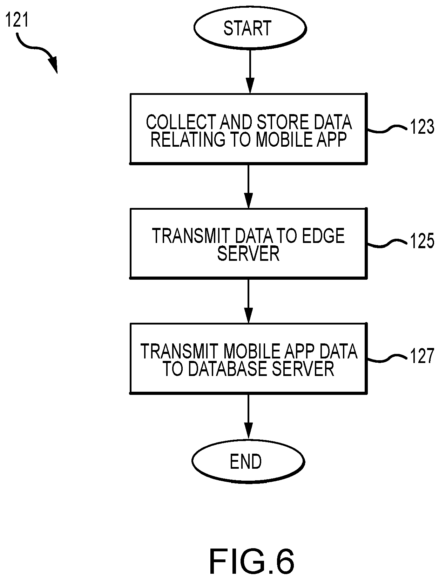

The disclosed systems may also be operated to provide still yet other functionalities. For example, and with reference now to Figure 6, mobile application 16 may be configured or programmed to implement method 121 to collect and transmit to edge computing system 14 information and data relating to use of the mobile application 16. In a first step 123 of method 121, mobile application 16 collects and stores data relating to the operation of mobile application 16. Such data may include, but is not limited to, data relating to the selected functions and operations sent to grilling appliance 12, information and data transmitted by grilling appliance 12 directly to mobile application 16, e.g., via communication link 88, as well as any software updates or troubleshooting solutions previously implemented via mobile application 16. Mobile application 16 may then transmit, at step 125, the stored data to edge computing platform 14 via two-way communication link 64. Mobile application 16 may perform step 125 automatically (i.e., without requiring further user input) and on a periodic basis, such as once daily. Alternatively, other reporting frequencies could be used. Thereafter, edge server 32 may transfer, at step 127, the stored data to database server 38 for further analysis and/or storage.

### EXAMPLES

The systems, methods, and instrumentalities of the present invention may be more easily understood by considering examples of how they may be applied in various operational scenarios.

Example 1 - The user desires to change the operating temperature of the grilling appliance 12 from mobile device 18. The user enters the appropriate temperature change command via the user interface 62 provided on mobile device 18. The command is then transmitted or sent from mobile device 18 to grilling appliance 12. If the mobile device 18 is not operatively connected to grilling appliance 12 via short-range communication link 88, the command will be sent via edge computing platform 14. That is, the command or signal is transmitted to edge server 32 over communication link 64 previously established between edge server 32 and mobile device 18. The transmitted signal may be in the native language format of the mobile application software 16, Java Script. The Java Script signal is then translated by translator/formatting module 80 into a translated signal (e.g., a hexadecimal signal) suitable for operating control system 22. Translator/formatting module 80 may also format the translated signal into a data packet (e.g., a hexadecimal data packet) suitable for transmission to grilling appliance 12. Edge server 32 then transmits the data packet to grilling appliance 12 via communication link 54. Thereafter, control system 22 executes the command.

Alternatively, if the mobile device 18 is operatively connected to grilling appliance 12 directly, i.e., by short-range communication link 88, then the temperature change command will be transmitted directly to grilling appliance 12, i.e., without the need for edge computing platform 14. Mobile application 16 may translate the temperature command signal from a native language format signal into a translated signal suitable for use by control system 22 of grilling appliance 12. Thereafter, control system 22 of grilling appliance 12 executes the command.

Example 2 - A functional error has occurred in one of the systems 20 of grilling appliance 12. Control system 22 prepares a data packet, such as a hexadecimal data packet, relating to the functional error. The communication interface system 26 then transmits the data packet to edge server 32 via two-way communication link 54. Translator/formatting module 80 provided on edge server 32 then translates and formats the data packet into a message, such as a Java Script message, suitable for use by mobile application 16. Edge server 32 then transmits, via communication link 64, the formatted message to the mobile application 16. Thereafter, mobile application 16 displays the message on user interface 62.

Example 3 - A recipe request from the user is received by mobile application 16 via user interface 62. Mobile application 16 transmits the recipe request to edge computing platform 14 via communication link 64. Thereafter, edge server 32 transmits the request to mobile API server 36. Mobile API server 36 then fetches the requested recipe from the database server 38. Data relating to the requested recipe is then sent from the mobile API server 36 to one or more of the servers 32 comprising edge computing platform 14. The data may be sent in the native language format of the mobile application 16, e.g., Java Script. The Java Script is then translated and formatted by translator/formatting module 80 provided on edge server 32. The resulting data packet, which may comprise a hexadecimal data packet, is then sent to grilling appliance 12. Control system 22 will then operate the various grilling systems 20 as required by the requested recipe. For example, in some embodiments, the cooking time and temperature provided in the recipe is automatically set on grilling appliance 12 by control system 22.

Unless defined otherwise, all technical and scientific terms used herein have the same meaning as commonly understood by persons having ordinary skill in the art to which the invention pertains. Although any methods and materials similar or equivalent to those described herein can be used in practice for testing of the present invention, the preferred materials and methods are described herein.

In understanding the scope of the present invention, the articles "a" and "an" are used herein to refer to one or to more than one (i.e., to at least one) of the grammatical object of the article. By way of example, "an element" means one element or more than one element. The term "comprising" and its derivatives, as used herein, are intended to be open ended terms that specify the presence of the stated features, elements, components, groups, and/or steps, but do not exclude the presence of other unstated features, elements, components, groups, and/or steps. The foregoing also applies to words having similar meanings such as the terms, "including," "having" and their derivatives. Any terms of degree such as "substantially," "about" and "approximate" as used herein mean a reasonable amount of deviation of the modified term such that the end result is not significantly changed. When referring to a measurable value, such as an amount, a temporal duration, and the like, these terms are meant to encompass variations of at least ±20% or 110%, more preferably ±5%, even more preferably ±1%, and still more preferably ±0.1% from the specified value, as such variations are appropriate and as would be understood by persons having ordinary skill in the art to which the invention pertains.

As used herein, the terms "processor," "computer," or "computer processor" may include any device, system, or combination thereof capable of executing instructions provided to the processor. A processor may be distributed over a network and may include one or more constituent processors. The term "memory" may include any volatile or non-volatile memory system, or combinations thereof capable of storing instructions to be executed by a processor. Memory may be distributed or local.

Throughout this disclosure, various aspects of the invention may be presented in a range format. It should be understood that the description in a range format is merely for convenience and brevity and should not be construed as an inflexible limitation on the scope of the invention. Accordingly, the description of a range should be considered to have specifically disclosed all the possible sub-ranges as well as individual numerical values within that range. For example, description of a range such as from 1 to 6 should be considered to have specifically disclosed sub-ranges such as from 1 to 3, from 1 to 4, from 1 to 5, from 2 to 4, from 2 to 6, from 3 to 6 etc., as well as individual numbers within that range, for example, 1, 2, 2.6, 3, 4, 5, 5.7, and 6. This applies regardless of the breadth of the range.

While only selected embodiments have been chosen to illustrate the present invention, it will be apparent to those skilled in the art from this disclosure that various changes and modifications can be made herein without departing from the scope of the invention as defined in the appended claims. For example, the size, shape, location or orientation of the various components can be changed as needed and/or desired. Components that are shown directly connected or contacting each other can have intermediate structures disposed between them. The functions of one element can be performed by two, and vice versa. The structures and functions of one embodiment can be adapted to another embodiment. It should be noted that while the present invention is shown and described herein as it could be used in conjunction with a configuration of various components, it could be utilized with other configurations, either now known in the art or that may be developed in the future, so long as the objects and features of the invention are achieved, as would become apparent to persons having ordinary skill in the art after having become familiar with the teachings provided herein. Consequently, the present invention should not be regarded as limited to that shown and described herein. It is not necessary for all advantages to be present in a particular embodiment at the same time. Thus, the foregoing descriptions of the embodiments according to the present invention are provided for illustration only, and not for the purpose of limiting the invention as defined by the appended claims.

Having herein set forth preferred embodiments of the present invention, it is anticipated that suitable modifications can be made thereto. The invention shall therefore only be construed in accordance with the following claims:

## Claims

1. A method (50) of operating a grilling appliance (12), the grilling appliance (12) comprising a control system (22) operable to control a plurality of grilling functions of the grilling appliance (12), the grilling appliance (12) also including a communications interface (26) operatively associated with the control system (22), comprising:
connecting (52) the communications interface (26) of the grilling appliance (12) with a first server (32) comprising an edge computing platform (14), wherein the first server (32) is in operative communication with a mobile API server (36), the mobile API server (36) not comprising a part of the edge computing platform (14);
operating (72) a mobile application (16) provided on a mobile device (18) to select at least one function from among the plurality of grilling functions of the grilling appliance (12), the mobile application (16) operating the mobile device (18) to transmit to the first server (32) a signal relating to the selected function, the mobile device (18) transmitting the signal in a native language format, the first server (32) translating the native language format signal into a translated data signal formatted to operate the control system (22) of said grilling appliance (12) to implement the selected function, the first server (32) transmitting the translated data signal to the communication interface (26) of the grilling appliance (12), the control system (22) of the grilling appliance (12) operating the grilling appliance (12) to implement the selected function;
establishing a data communications link between the control system (22) of the grilling appliance (12) and the mobile API server (36) before said operating (72) the mobile application (16) provided on the mobile device (18) to select the at least one function; and
establishing a two-way data communications link (64) between the mobile application (16) provided on the mobile device (18) and the mobile API server (36) before said operating (72) the mobile application (16) provided on the mobile device (18) to select the at least one function, and wherein the mobile application (16) provided on the mobile device (18) transmits to the control system (22) of the grilling appliance (12), via the mobile API server (36) and the first server (32), data relating to the operation of the grilling appliance (12) in the absence of polling the mobile API server (36).

2. The method (50) of claim 1, wherein the first server (32) is provided with a websocket API (58), wherein said establishing the data communications link between the control system (22) of the grilling appliance (12) and the mobile API server (36) comprises using the websocket API (58) to establish a two-way data communications link (54) between the control system (22) of the grilling appliance (12) and the mobile API server (36), and wherein the control system (22) of the grilling appliance (12) transmits to the mobile device (18) via the mobile API server (36) data relating to the grilling appliance (12) in the absence of polling the mobile API server (36).

3. The method (50) of claim 1, wherein said establishing the two-way data communications link between the mobile application (16) provided on the mobile device (18) and the mobile API server (36) comprises using a websocket API (58).

4. The method (50) of claim **1,** wherein the control system (22) of the grilling appliance (12) sends to the first server (32) a signal relating to a functional error, wherein the first server (32) translates the signal relating to the functional error into a message relating to the functional error, and wherein the first server (32) transmits to the mobile application (16) provided on the mobile device (18) a message relating to the functional error.

5. The method (50) of claim 1, further comprising operating the mobile application (16) to request a recipe, the mobile application (16) operating the mobile device (18) to transmit the recipe request to the mobile API server (36).

6. The method (50) of claim 1, further comprising:
establishing a direct communication link (88) between the mobile device (18) and the control system (22) of the grilling appliance (12); and
operating the mobile application (16) to select at least one function from among the plurality of grilling functions, the mobile application (16) operating the mobile device (18) to transmit directly to the control system (22) of the grilling appliance (12) a signal relating to the selected function, the control system (22) of the grilling appliance (12) operating the grilling appliance (12) to implement the selected function.

7. The method (50) of claim 6, wherein said establishing a direct communication link (88) between the mobile device (18) and the control system (22) of the grilling appliance (12) comprises establishing a short-range wireless communication link between the mobile device (18) and the control system (22) of the grilling appliance (12).

8. The method (50) of claim 7, wherein the short-range wireless communication link comprises a wireless communications link compliant with a Bluetooth short-range wireless communications standard.

9. A computer-implemented method (50) of controlling a grilling appliance (12), comprising:
receiving at a first server (32) comprising an edge computing platform (14) a signal from a mobile device (18) relating to at least one grilling function of the grilling appliance (12);
using the first server (32) to translate the signal from the mobile device (18) into translated data formatted to operate the grilling appliance (12);
transmitting the translated data to the grilling appliance (12);
receiving at a mobile API server (36) a signal from the mobile device (18) relating to a recipe request;
using the mobile API server (36) to obtain the requested recipe from a database server (38) operatively associated with the API server (36), the requested recipe including data relating to at least one of a cooking time and a cooking temperature;
using the mobile API server (36) to send data relating to the obtained recipe to the first server (32);
using the first server (32) to translate the data relating to the obtained recipe from the mobile API server (36) into translated data formatted to operate the grilling appliance (12); and
using the first server (32) to transmit the translated data to the grilling appliance (12).

10. The computer-implemented method (50) of claim 9, further comprising:
receiving at the first server (32) a signal from the grilling appliance (12) relating to a functional error;
using the first server (32) to translate the signal from the grilling appliance (12) into a message relating to the functional error; and
transmitting the message relating to the functional error to the mobile device (18).

11. The computer-implemented method (50) of claim 9, further comprising using a control system (22) operatively associated with the grilling appliance (12) to control at least one of the cooking time and the cooking temperature.

12. A system (10), comprising:
a grilling appliance (12), comprising:
a control system (22) operable to control a plurality of grilling functions of the grilling appliance (12), and
a communications interface (26) operatively associated with the control system (22);
a first server (32) comprising an edge computing platform (14);
a mobile API server (36) in operative communication with the first server (32), the mobile API server (36) not comprising a part of the edge computing platform (14); and
a mobile application (16) configured to be provided on a mobile device (18),
wherein:
the mobile application (16) is configured to:
transmit to the first server (32) a native language format signal, the native language format signal relating to at least one selected grilling function of the plurality of grilling functions of the grilling appliance (12), and
transmit to the control system (22), via the mobile API server (36) and the first server (32), data relating to the operation of the grilling appliance (12) in the absence of polling the mobile API server;
the first server (32) is configured to:
translate the native language format signal into a translated data signal formatted to operate the control system (22) of said grilling appliance (12) to implement the selected function; and
transmit the translated data signal to the communication interface (26) of the grilling appliance (12); and
the control system (22) of the grilling appliance (12) is configured to operate the grilling appliance (12) to implement the selected function,
wherein the system is configured to:
establish a data communications link between the control system (22) and the mobile API server (36) before the mobile application (16) is used to select the at least one grilling function, and
establish a two-way data communications link between the mobile application (16) and the mobile API server (36) before the mobile application (16) selects the at least one grilling function.

## Patentansprüche

1. Verfahren (50) zum Betreiben eines Grillgeräts (12), wobei das Grillgerät (12) ein Steuersystem (22) umfasst, das zum Steuern einer Vielzahl von Grillfunktionen des Grillgeräts (12) betriebsfähig ist, wobei das Grillgerät (12) außerdem eine Kommunikationsschnittstelle (26) umfasst, die operativ mit dem Steuersystem (22) verbunden ist, umfassend:
Verbinden (52) der Kommunikationsschnittstelle (26) des Grillgeräts (12) mit einem ersten Server (32), der eine Edge-Computing-Plattform (14) umfasst, wobei der erste Server (32) in operativer Kommunikation mit einem mobilen API-Server (36) steht, wobei der mobile API-Server (36) keinen Teil der Edge-Computing-Plattform (14) umfasst;
Betreiben (72) einer mobilen Anwendung (16), die auf einem mobilen Gerät (18) bereitgestellt ist, um mindestens eine Funktion aus der Vielzahl von Grillfunktionen des Grillgeräts (12) auszuwählen, wobei die mobile Anwendung (16) das mobile Gerät (18) dazu veranlasst, ein Signal bezüglich der ausgewählten Funktion an den ersten Server (32) zu übertragen, wobei das mobile Gerät (18) das Signal in einem nativen Sprachformat überträgt, wobei der erste Server (32) das Signal im nativen Sprachformat in ein übersetztes Datensignal übersetzt, das so formatiert ist, dass es das Steuersystem (22) des Grillgeräts (12) zum Ausführen der ausgewählten Funktion betreibt, wobei der erste Server (32) das übersetzte Datensignal an die Kommunikationsschnittstelle (26) des Grillgeräts (12) überträgt, wobei das Steuersystem (22) des Grillgeräts (12) das Grillgerät (12) zum Ausführen der ausgewählten Funktion betreibt;
Herstellen einer Datenkommunikationsverbindung zwischen dem Steuersystem (22) des Grillgeräts (12) und dem mobilen API-Server (36) vor dem Betreiben (72) der auf dem mobilen Gerät (18) bereitgestellten mobilen Anwendung (16), um die mindestens eine Funktion auszuwählen; und
Herstellen einer bidirektionalen Datenkommunikationsverbindung (64) zwischen der auf dem mobilen Gerät (18) bereitgestellten mobilen Anwendung (16) und dem mobilen API-Server (36) vor dem Betreiben (72) der auf dem mobilen Gerät (18) bereitgestellten mobilen Anwendung (16), um die mindestens eine Funktion auszuwählen, und wobei die auf dem mobilen Gerät (18) bereitgestellte mobile Anwendung (16) Daten in Bezug auf den Betrieb des Grillgeräts (12) über den mobilen API-Server (36) und den ersten Server (32) an das Steuersystem (22) des Grillgeräts (12) überträgt, ohne dass der mobile API-Server (36) abgefragt wird.

2. Verfahren (50) nach Anspruch 1, wobei der erste Server (32) mit einer Websocket-API (58) ausgestattet ist, wobei das Herstellen der Datenkommunikationsverbindung zwischen dem Steuersystem (22) des Grillgeräts (12) und dem mobilen API-Server (36) das Verwenden der Websocket-API (58) zum Herstellen einer bidirektionalen Datenkommunikationsverbindung (54) zwischen dem Steuersystem (22) des Grillgeräts (12) und dem mobilen API-Server (36) umfasst, und wobei das Steuersystem (22) des Grillgeräts (12) Daten bezüglich des Grillgeräts (12) über den mobilen API-Server (36) an das mobile Gerät (18) überträgt, ohne dass eine Abfrage des mobilen API-Servers (36) erfolgt.

3. Verfahren (50) nach Anspruch 1, wobei das Herstellen der bidirektionalen Datenkommunikationsverbindung zwischen der auf dem mobilen Gerät (18) bereitgestellten mobilen Anwendung (16) und dem mobilen API-Server (36) die Verwendung einer Websocket-API (58) umfasst.

4. Verfahren (50) nach Anspruch 1, wobei das Steuersystem (22) des Grillgeräts (12) ein Signal bezüglich eines Funktionsfehlers an den ersten Server (32) sendet, wobei der erste Server (32) das Signal bezüglich des Funktionsfehlers in eine Nachricht bezüglich des Funktionsfehlers übersetzt und wobei der erste Server (32) eine Nachricht bezüglich des Funktionsfehlers an die auf dem mobilen Gerät (18) bereitgestellte mobile Anwendung (16) überträgt.

5. Verfahren (50) nach Anspruch 1, ferner umfassend das Betreiben der mobilen Anwendung (16) zum Anfordern eines Rezepts, wobei die mobile Anwendung (16) das mobile Gerät (18) betreibt, um die Rezeptanforderung an den mobilen API-Server (36) zu übertragen.

6. Verfahren (50) nach Anspruch 1, ferner umfassend:
Herstellen einer direkten Kommunikationsverbindung (88) zwischen dem Mobilgerät (18) und dem Steuersystem (22) des Grillgeräts (12); und
Betreiben der mobilen Anwendung (16), um mindestens eine Funktion aus der Vielzahl von Grillfunktionen auszuwählen, wobei die mobile Anwendung (16) das Mobilgerät (18) dazu veranlasst, ein Signal bezüglich der ausgewählten Funktion direkt an das Steuersystem (22) des Grillgeräts (12) zu übertragen, wobei das Steuersystem (22) des Grillgeräts (12) das Grillgerät (12) dazu veranlasst, die ausgewählte Funktion auszuführen.

7. Verfahren (50) nach Anspruch 6, wobei das Herstellen einer direkten Kommunikationsverbindung (88) zwischen dem Mobilgerät (18) und dem Steuersystem (22) des Grillgeräts (12) das Herstellen einer drahtlosen Nahbereichskommunikationsverbindung zwischen dem Mobilgerät (18) und dem Steuersystem (22) des Grillgeräts (12) umfasst.

8. Verfahren (50) nach Anspruch 7, wobei die drahtlose Nahbereichskommunikationsverbindung eine drahtlose Kommunikationsverbindung umfasst, die mit einem Bluetooth-Nahbereichs-Drahtloskommunikationsstandard kompatibel ist.

9. Computerimplementiertes Verfahren (50) zur Steuerung eines Grillgeräts (12), umfassend:
Empfangen eines Signals von einem Mobilgerät (18) in Bezug auf mindestens eine Grillfunktion des Grillgeräts (12) auf einem ersten Server (32), der eine Edge-Computing-Plattform (14) umfasst;
Verwenden des ersten Servers (32) zum Übersetzen des Signals von dem Mobilgerät (18) in übersetzte Daten,
die zum Betrieb des Grillgeräts (12) formatiert sind;
Übertragen der übersetzten Daten an das Grillgerät (12);
Empfangen eines Signals von dem Mobilgerät (18) in Bezug auf eine Rezeptanforderung auf einem mobilen API-Server (36);
Verwenden des mobilen API-Servers (36) zum Abrufen des angeforderten Rezepts von einem Datenbankserver (38),
der operativ mit dem API-Server (36) verbunden ist, wobei das angeforderte Rezept Daten in Bezug auf mindestens eine der folgenden Funktionen umfasst:
Garzeit und Gartemperatur;
Verwenden des mobilen API-Servers (36) zum Senden von Daten in Bezug auf das abgerufene Rezept an den ersten Server (32);
Verwenden des ersten Servers (32) zum Übersetzen der Daten, die sich auf das erhaltene Rezept vom mobilen API-Server (36) beziehen, in übersetzte Daten, die für den Betrieb des Grillgeräts (12) formatiert sind; und
Verwenden des ersten Servers (32) zum Übertragen der übersetzten Daten an das Grillgerät (12).

10. Computerimplementiertes Verfahren (50) nach Anspruch 9, ferner umfassend:
Empfangen eines Signals vom Grillgerät (12) in Bezug auf einen Funktionsfehler am ersten Server (32);
Verwenden des ersten Servers (32) zum Übersetzen des Signals vom Grillgerät (12) in eine Nachricht in Bezug auf den Funktionsfehler; und
Übertragen der Nachricht in Bezug auf den Funktionsfehler an das mobile Gerät (18).

11. Computerimplementiertes Verfahren (50) nach Anspruch 9, ferner umfassend das Verwenden eines Steuersystems (22), das operativ mit dem Grillgerät (12) verbunden ist, um mindestens eines der folgenden Elemente zu steuern: Garzeit und Gartemperatur.

12. System (10), umfassend:
ein Grillgerät (12), umfassend:
ein Steuersystem (22), das eine Vielzahl von Grillfunktionen des Grillgeräts (12) steuern kann, und
eine Kommunikationsschnittstelle (26), die operativ mit dem Steuersystem (22) verbunden ist;
einen ersten Server (32), der eine Edge-Computing-Plattform (14) umfasst;
einen mobilen API-Server (36), der operativ mit dem ersten Server (32) kommuniziert, wobei der mobile API-Server (36) keinen Teil der Edge-Computing-Plattform (14) umfasst; und
eine mobile Anwendung (16), die so konfiguriert ist,
dass sie auf einem mobilen Gerät (18) bereitgestellt wird,
wobei:
die mobile Anwendung (16) dazu konfiguriert ist:
an den ersten Server (32) ein Signal im nativen Sprachformat zu übertragen, wobei sich das Signal im nativen Sprachformat auf mindestens eine ausgewählte Grillfunktion der Vielzahl von Grillfunktionen des Grillgeräts (12) bezieht, und
über den mobilen API-Server (36) und den ersten Server (32) Daten über den Betrieb des Grillgeräts (12) an das Steuersystem (22) zu übertragen, ohne dass der mobile API-Server abgefragt wird;
der erste Server (32) dazu konfiguriert ist:
das Signal im nativen Sprachformat in ein übersetztes Datensignal zu übersetzen, das so formatiert ist, dass es das Steuersystem (22) des Grillgeräts (12) betreibt,
um die ausgewählte Funktion zu implementieren; und
das übersetzte Datensignal an die Kommunikationsschnittstelle (26) des Grillgeräts (12) zu übertragen; und
das Steuersystem (22) des Grillgeräts (12) ist so konfiguriert, dass es das Grillgerät (12) betreibt, um die ausgewählte Funktion zu implementieren,
wobei das System dazu konfiguriert ist:
eine Datenkommunikationsverbindung zwischen dem Steuersystem (22) und dem mobilen API-Server (36) herzustellen, bevor die mobile Anwendung (16) verwendet wird, um die mindestens eine Grillfunktion auszuwählen,
und
eine bidirektionale Datenkommunikationsverbindung zwischen der mobilen Anwendung (16) und dem mobilen API-Server (36) herzustellen, bevor die mobile Anwendung (16) die mindestens eine Grillfunktion auswählt.

## Revendications

1. Procédé (50) de fonctionnement d'un appareil à griller (12), l'appareil à griller (12) comprenant un système de commande (22) pouvant fonctionner pour commander une pluralité de fonctions de cuisson au gril de l'appareil à griller (12), l'appareil à griller (12) comportant également une interface de communication (26) associée opérationnellement au système de commande (22), comprenant :
la connexion (52) de l'interface de communication (26) de l'appareil à griller (12) avec un premier serveur (32) comprenant une plate-forme informatique en périphérie (14), dans lequel le premier serveur (32) est en communication opérationnelle avec un serveur API mobile (36), le serveur API mobile (36) ne comprenant pas de partie de la plate-forme informatique en périphérie (14) ;
le fonctionnement (72) d'une application mobile (16) fournie sur un dispositif mobile (18) pour sélectionner au moins une fonction parmi la pluralité de fonctions de cuisson au gril de l'appareil à griller (12),
l'application mobile (16) actionnant le dispositif mobile (18) pour envoyer au premier serveur (32) un signal concernant la fonction sélectionnée, le dispositif mobile (18) envoyant le signal dans un format de langage natif, le premier serveur (32) traduisant le signal en format de langage natif en un signal de données traduit formaté pour faire fonctionner le système de commande (22) dudit appareil à griller (12) pour mettre en œuvre la fonction sélectionnée, le premier serveur (32) envoyant le signal de données traduit à l'interface de communication (26) de l'appareil à griller (12), le système de commande (22) de l'appareil à griller (12) actionnant l'appareil à griller (12) pour mettre en œuvre la fonction sélectionnée ;
l'établissement d'une liaison de communication de données entre le système de commande (22) de l'appareil à griller (12) et le serveur API mobile (36) avant ledit fonctionnement (72) de l'application mobile (16) fournie sur le dispositif mobile (18) pour sélectionner l'au moins une fonction ; et
l'établissement d'une liaison de communication de données bidirectionnelle (64) entre l'application mobile (16) fournie sur le dispositif mobile (18) et le serveur API mobile (36) avant ledit fonctionnement (72) de l'application mobile (16) fournie sur le dispositif mobile (18) pour sélectionner l'au moins une fonction,
et dans lequel l'application mobile (16) fournie sur le dispositif mobile (18) transmet au système de commande (22) de l'appareil à griller (12), par l'intermédiaire du serveur API mobile (36) et du premier serveur (32), des données concernant le fonctionnement de l'appareil à griller (12) sans interroger le serveur API mobile (36).

2. Procédé (50) selon la revendication 1, dans lequel le premier serveur (32) est doté d'une API WebSocket (58), dans lequel ledit établissement de la liaison de communication de données entre le système de commande (22) de l'appareil à griller (12) et le serveur API mobile (36) comprend l'utilisation de l'API WebSocket (58) pour établir une liaison de communication de données bidirectionnelle (54) entre le système de commande (22) de l'appareil à griller (12) et le serveur API mobile (36), et dans lequel le système de commande (22) de l'appareil à griller (12) transmet au dispositif mobile (18), par l'intermédiaire du serveur API mobile (36), des données concernant l'appareil à griller (12) sans interroger le serveur API mobile (36).

3. Procédé (50) selon la revendication 1, dans lequel ledit établissement de la liaison de communication de données bidirectionnelle entre l'application mobile (16) fournie sur le dispositif mobile (18) et le serveur API mobile (36) comprend l'utilisation d'une API WebSocket (58).

4. Procédé (50) selon la revendication 1, dans lequel le système de commande (22) de l'appareil à griller (12) envoie au premier serveur (32) un signal concernant une anomalie de fonctionnement, dans lequel le premier serveur (32) traduit le signal concernant l'anomalie de fonctionnement en un message concernant l'anomalie de fonctionnement, et dans lequel le premier serveur (32) transmet à l'application mobile (16) fournie sur le dispositif mobile (18) un message concernant l'anomalie de fonctionnement.

5. Procédé (50) selon la revendication 1, comprenant en outre le fonctionnement de l'application mobile (16) pour demander une recette, l'application mobile (16) actionnant le dispositif mobile (18) pour transmettre la demande de recette au serveur API mobile (36).

6. Procédé (50) selon la revendication 1, comprenant en outre :
l'établissement d'une liaison de communication directe (88) entre le dispositif mobile (18) et le système de commande (22) de l'appareil à griller (12) ;
et
le fonctionnement de l'application mobile (16) pour sélectionner au moins une fonction parmi la pluralité de fonctions de cuisson au gril, l'application mobile (16) actionnant le dispositif mobile (18) pour envoyer directement au système de commande (22) de l'appareil à griller (12) un signal concernant la fonction sélectionnée, le système de commande (22) de l'appareil à griller (12) actionnant l'appareil à griller (12) pour mettre en œuvre la fonction sélectionnée.

7. Procédé (50) selon la revendication 6, dans lequel ledit établissement d'une liaison de communication directe (88) entre le dispositif mobile (18) et le système de commande (22) de l'appareil à griller (12) comprend l'établissement d'une liaison de communication sans fil à courte portée entre le dispositif mobile (18) et le système de commande (22) de l'appareil à griller (12).

8. Procédé (50) selon la revendication 7, dans lequel la liaison de communication sans fil à courte portée comprend une liaison de communication sans fil conforme à une norme de communication sans fil à courte portée Bluetooth.

9. Procédé mis en œuvre par ordinateur (50) de commande d'un appareil à griller (12), comprenant :
la réception, au niveau d'un premier serveur (32) comprenant une plate-forme informatique en périphérie (14), d'un signal en provenance d'un dispositif mobile (18) concernant au moins une fonction de cuisson au gril de l'appareil à griller (12) ;
l'utilisation du premier serveur (32) pour traduire le signal du dispositif mobile (18) en données traduites formatées pour faire fonctionner l'appareil à griller (12) ;
la transmission des données traduites à l'appareil à griller (12) ;
la réception, au niveau d'un serveur API mobile (36), d'un signal en provenance du dispositif mobile (18) concernant une demande de recette ;
l'utilisation du serveur API mobile (36) pour obtenir la recette demandée à partir d'un serveur de base de données (38) associé opérationnellement au serveur API (36), la recette demandée comportant des données concernant au moins l'un d'un temps de cuisson et d'une température de cuisson ;
l'utilisation du serveur API mobile (36) pour envoyer des données concernant la recette obtenue au premier serveur (32) ;
l'utilisation du premier serveur (32) pour traduire les données concernant la recette obtenue à partir du serveur API mobile (36) en données traduites formatées pour faire fonctionner l'appareil à griller (12) ; et
l'utilisation du premier serveur (32) pour transmettre les données traduites à l'appareil à griller (12).

10. Procédé mis en œuvre par ordinateur (50) selon la revendication 9, comprenant en outre :
la réception, au niveau du premier serveur (32), d'un signal en provenance de l'appareil à griller (12) concernant une anomalie de fonctionnement ;
l'utilisation du premier serveur (32) pour traduire le signal de l'appareil à griller (12) en un message concernant l'anomalie de fonctionnement ; et
la transmission du message concernant l'anomalie de fonctionnement au dispositif mobile (18).

11. Procédé mis en œuvre par ordinateur (50) selon la revendication 9, comprenant en outre l'utilisation d'un système de commande (22) associé opérationnellement à l'appareil à griller (12) pour commander au moins l'un du temps de cuisson et de la température de cuisson.

12. Système (10), comprenant :
un appareil à griller (12), comprenant :
un système de commande (22) pouvant fonctionner pour commander une pluralité de fonctions de cuisson au gril de l'appareil à griller (12), et
une interface de communication (26) associée opérationnellement au système de commande (22) ;
un premier serveur (32) comprenant une plate-forme informatique en périphérie (14) ;
un serveur API mobile (36) en communication opérationnelle avec le premier serveur (32), le serveur API mobile (36) ne comprenant pas de partie de la plate-forme informatique en périphérie (14) ; et
une application mobile (16) configurée pour être fournie sur le dispositif mobile (18),
dans lequel :
l'application mobile (16) est configurée pour :
envoyer au premier serveur (32) un signal en format de langage natif, le signal en format de langage natif concernant au moins une fonction de cuisson au gril sélectionnée de la pluralité de fonctions de cuisson au gril de l'appareil à griller (12), et
transmettre au système de commande (22), par l'intermédiaire du serveur API mobile (36) et du premier serveur (32), des données concernant le fonctionnement de l'appareil à griller (12) sans interroger le serveur API mobile ;
le premier serveur (32) est configuré pour :
traduire le signal en format de langage natif en un signal de données traduit formaté pour faire fonctionner le système de commande (22) dudit appareil à griller (12) pour mettre en œuvre la fonction sélectionnée ; et
envoyer le signal de données traduit à l'interface de communication (26) de l'appareil à griller (12) ; et
le système de commande (22) de l'appareil à griller (12) est configuré pour actionner l'appareil à griller (12) pour mettre en œuvre la fonction sélectionnée,
dans lequel le système est configuré pour :
établir une liaison de communication de données entre le système de commande (22) et le serveur API mobile (36) avant que l'application mobile (16) ne soit utilisée pour sélectionner l'au moins une fonction de cuisson au gril,
et
établir une liaison de communication de données bidirectionnelle entre l'application mobile (16) et le serveur API mobile (36) avant que l'application mobile (16) ne sélectionne l'au moins une fonction de cuisson au gril.
